# EUROPEAN PATENT APPLICATION

(11) **EP 4 497 643 A1**
(43) Date of publication of application: **29.01.2025**
(21) Application number: 22933270.5
(22) Date of filing: 22.03.2022
(51) Int. Cl.: B60W 10/06, B60W 20/19

(54) **HYBRID VEHICLE**

(71) Applicant: Mitsubishi Jidosha Kogyo Kabushiki Kaisha, Tokyo 108-8410 (JP)
(72) Inventor: KOYAMA Kyotaro, Tokyo 108-8410 (JP); YAGURA Hirofumi, Tokyo 108-8410 (JP); HAYASHI Hiroki, Tokyo 108-8410 (JP); MIZUI Toshifumi, Tokyo 108-8410 (JP); SASAKI Yusuke, Tokyo 108-8410 (JP); NISHIWAKI Hiroto, Tokyo 108-8410 (JP); TAWAKI Tatsuya, Tokyo 108-8410 (JP)
(74) Representative: Vossius & Partner Patentanwälte Rechtsanwälte mbB
(86) International application number: PCT/JP2022/013202
(87) International publication number: WO 2023/181123

(57) **Abstract**

The disclosed hybrid vehicle (1) is a hybrid vehicle (1) including an engine (2), a motor (3), a generator (4), and a controller (10) that controls an operating state of at least the engine (2), and performs series driving in which driving force from the motor (3) drives the vehicle while driving force from the engine (2) causes the generator (4) to generate electric power. The hybrid vehicle (1) has a normal mode in which a driver requesting output is set according to an accelerator opening degree and a sport mode in which the driver requesting output is set to be equal to or higher than the driver requesting output set in the normal mode according to the accelerator opening degree. The controller (10) sets a first minimum rotational speed (ω₁) of the engine (2) in the sport mode higher than a second minimum rotational speed (ω₂) of the engine (2) in the normal mode during series driving.

## Description

### [TECHNICAL FIELD]

The present disclosure relates to a hybrid vehicle that performs series driving.

### [BACKGROUND ART]

Conventionally, a hybrid vehicle that performs series driving is known. The hybrid vehicle includes an engine, a motor, and a generator. In series driving, the driving force from the engine causes the generator to generate electric power, while the motor is operated with the generated electric power or battery electric power to generate the driving force for the vehicle. During series driving, the operating state of the engine is controlled, for example, in view of fuel efficiency and quietness. This can lead to effects such as extending the cruising distance of the vehicle and improving the quietness performance (for example, see Patent Document 1).

### [PRIOR ART DOCUMENT]

### [PATENT DOCUMENT]

[Patent Document 1] JP 2020-019467 A

### [SUMMARY OF INVENTION]

### [TECHNICAL PROBLEMS]

Some recent hybrid vehicles allow the driver to select their preferred mode from multiple drive modes. Drive modes refer to the sets of driving characteristics and running characteristics of the vehicle (formulated patterns of behaviors of the vehicle in response to operations by the driver). Specific examples of drive modes include a normal mode and a sport mode. The driving characteristics and running characteristics of the vehicle in each mode are controlled to have characteristics appropriate for that mode. For example, the driver requesting output for a given accelerator opening degree is set to a higher value in the sport mode than in the normal mode. This enhances the acceleration response for the same operation of the accelerator because the engine and/or the motor are controlled to produce a greater output, achieving a powerful and responsive driving experience.

On the other hand, when the sport mode as described above is applied to series driving of a hybrid vehicle, the driver requesting output tends to be excessively high upon a sudden increase in accelerator opening degree. This makes it difficult to match the actual engine output to the increase in driver requesting output, making it difficult to achieve a good acceleration response. Particularly, when the rotational speed of the engine is set relatively low when the accelerator is not applied to suppress noise and vibration, there is an increased time lag before the engine rotational speed is sufficiently increased, which reduces the acceleration response immediately after the accelerator is applied.

One of the objects of the present disclosure is conceived of in light of the aforementioned problem, and is to provide a hybrid vehicle that can improve the acceleration response in the sport mode during series driving. It is to be noted the object is not limited to the above, and the effects and advantages derived from each configuration described in the 'DESCRIPTION OF EMBODIMENTS' described later, which cannot be achieved by conventional art, are also positioned as other objects of the present disclosure.

### [SOLUTION TO PROBLEMS]

A hybrid vehicle of the disclosure can be embodied in an aspect or application disclosed below and solves at least some of the aforementioned problem.

The hybrid vehicle of the disclosure is a hybrid vehicle including an engine, a motor, a generator, and a controller that controls an operating state of at least the engine. The hybrid vehicle is capable of performing series driving in which driving force from the motor causes the vehicle to drive while driving force from the engine causes the generator to generate electric power. The hybrid vehicle has a normal mode in which a driver requesting output is set according to an accelerator opening degree and a sport mode in which the driver requesting output is set to be equal to or higher than the driver requesting output set in the normal mode according to the accelerator opening degree. The controller sets a first minimum rotational speed of the engine in the sport mode to be higher than a second minimum rotational speed of the engine in the normal mode during the series driving.

### [ADVANTAGEOUS EFFECTS]

According to the hybrid vehicle of the disclosure, the engine is controlled such that the first minimum rotational speed of the engine in the sport mode is higher than the second minimum rotational speed of the engine in the normal mode. In other words, the minimum rotational speed of the engine in the sport mode is controlled to be higher than that in the normal mode. This allows the engine rotational speed to increase to a desired level in a relatively short time when the accelerator pedal is depressed. Consequently, the acceleration response immediately after the accelerator is applied in the sport mode during the series driving can be improved.

### [BRIEF DESCRIPTION OF DRAWINGS]

FIG. 1 is a block diagram illustrating the configuration of a hybrid vehicle;
FIG. 2 is a graph exemplifying the relationship between the accelerator opening degree (accelerator position) and the driver requesting output;
FIG. 3 is a graph exemplifying the change in rotational speed of the engine (angular velocity of the engine, engine speed) in response to an operation of the accelerator;
FIG. 4 is a graph exemplifying the relationship between the vehicle speed and the minimum rotational speed of the engine;
FIG. 5 is an example flowchart for controlling the operating state of the engine; and
FIG. 6 is a graph exemplifying the change in motor output in response to an operation of the accelerator; FIG. 6A is a graph in the normal mode and FIG. 6B is a graph in the sport mode.

### [DESCRIPTION OF EMBODIMENTS]

The hybrid vehicle of the disclosure may be embodied by the following example.

### [EXAMPLES]

### [1. Configuration of Apparatus]

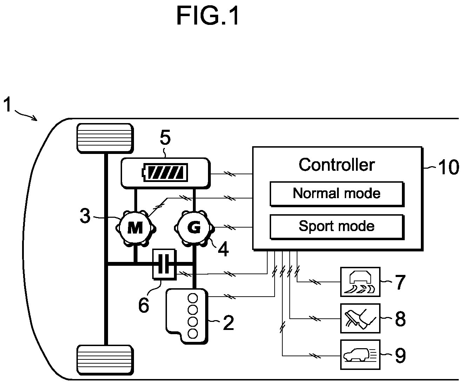

FIG. 1 is a block diagram illustrating the configuration of a hybrid vehicle 1 as an example. This hybrid vehicle 1 (also referred to simply as vehicle 1) is a hybrid vehicle (hybrid electric vehicle, HEV) or a plug-in hybrid vehicle (plug-in hybrid electric vehicle, PHEV), which includes an engine 2 and a motor 3 as drive sources, a generator 4 as an electric power generator, and a battery 5 as an electric power storage apparatus. A plug-in hybrid vehicle refers to a hybrid vehicle that allows for external charging to the battery 5 or external power supply from the battery 5. The plug-in hybrid vehicle is provided with a charging port (inlet) and/or an electrical wall socket (outlet). The charging port (inlet) is for plugging in a charging cable through which electric power is supplied from an external charging facility. The electrical wall socket (outlet) is for external power supply.

The engine 2 is an internal combustion engine, such as a gasoline engine or a diesel engine. The generator 4 is connected to the drive shaft of the engine 2. The generator 4 is an electric power generator (electric motor and electric power generator) that combines the function of driving the engine 2 with the electric power from the battery 5 and the function of generating electric power using the driving force from the engine 2. The electric power generated by the generator 4 is used to drive the motor 3 and charge the battery 5. A transmission mechanism, which is not illustrated, may be interposed on the power transmission path connecting the engine 2 and the generator 4.

The motor 3 is an electric motor (electric motor and electric power generator) that combines the function of driving the vehicle 1 using the electric power from the battery 5 or the electric power generated by the generator 4 and the function of charging the battery 5 with the electric power generated by regenerative power generation. The battery 5 is a secondary battery, such as a lithium-ion secondary battery or nickel-metal hydride battery. The drive shaft of the motor 3 is coupled to the drive wheels of the vehicle 1. A transmission mechanism, which is not illustrated, may be interposed on the power transmission path connecting the motor 3 and the drive wheels.

A clutch 6 is interposed on the power transmission path connecting the engine 2 and the motor 3. The engine 2 is connected to the drive wheels via the clutch 6, and the motor 3 is positioned on the drive wheel side relative to the clutch 6. Additionally, the generator 4 is connected on the engine 2 side relative to the clutch 6. When the clutch 6 is disengaged (released), the engine 2 and the generator 4 are disconnected from the drive wheels while the motor 3 remains connected to the drive wheels. Accordingly, for example, "EV driving (motor-only driving)" is realized by operating only the motor 3. In addition to that, by operating the engine 2 to generate electric power with the generator 4, "series driving" is realized. The series driving means driving the vehicle 1 with the driving force from the motor 3 while causing the generator 4 to generate electric power using driving force from the engine 2.

On the other hand, when the clutch 6 is connected (engaged), the engine 2, the motor 3, and the generator 4 are all connected to the drive wheels. Accordingly, for example, "engine driving (engine-only driving)" is realized by operating only the engine 2. In addition to that, by driving the motor 3 and/or the generator 4, "parallel driving" is realized. Both the series driving and parallel driving described above are also called "hybrid driving."

The operating states of the engine 2, the motor 3, the generator 4, the battery 5, and the clutch 6 are controlled by the controller 10. The controller 10 is a computer (electronic control unit, ECU) that has at least the function of controlling the operating state of the engine 2. The controller 10 has a processor (arithmetic processing unit) and memory (storage device) incorporated therein. The contents of the controls to be performed by the controller 10 (control program) are stored in the memory, and the contents thereof are read into the processor as appropriate and executed by the processor.

A drive mode selector 7 is connected to the controller 10 of this example. The drive mode selector 7 is a selection device operated by the driver of the vehicle 1 to choose one of the multiple drive modes and is disposed in an area easily accessible from the driver's seat, such as on the instrument panel or around the steering wheel. The information on the type of drive mode selected in response to an operation of the drive mode selector 7 is communicated to the controller 10.

Drive modes refer to the sets of driving characteristics and running characteristics of the vehicle (formulated patterns of behaviors of the vehicle in response to operations by the driver). Specific examples of drive modes include a normal mode (regular mode), a sport mode (paved road mode), a snow mode (snow road mode), a gravel mode (rough road mode), and an eco mode (energy saving mode, ecological mode). The driving characteristics and running characteristics of the vehicle 1 are controlled to have characteristics appropriate for the selected mode. The drive mode is basically set to be the preferred mode selected by the driver, but one of the modes may be automatically selected when given driving conditions are satisfied.

Known characteristics can be adopted as specific driving characteristics and running characteristics for each drive mode. For example, in the sport mode, the driver requesting output for a given accelerator opening degree is set to a higher value compared to the other modes including the normal mode. Such a setting enhances the acceleration response for the same operation of the accelerator, thereby achieving a powerful and responsive driving experience. Additionally, in the sport mode, the maximum allowable drive force difference between the left and right wheels is set to a relatively larger value compared to the other modes including the normal mode. Such a setting increases the maximum yaw moment that can be generated during cornering, thereby enhancing turning performance.

In the snow mode, for example, the upper limit values of the drive force and braking force are set lower, or the maximum allowable drive force difference between the left and right wheels is set to a relatively smaller value compared to the other modes including the normal mode. These settings enhance driving stability on slippery road surfaces. In the gravel mode, for example, the ratio of the rotational speed of the drive wheels to the drive source (gear ratio, reduction ratio) is set to a relatively larger value compared to the other modes including the normal mode. Such a setting increases the torque of the drive wheels, thereby enhancing the rough road performance. In the eco mode, for example, the rotational speed, torque, output (electric power), and the like are set so that the operating states of the engine 2, the motor 3, and the generator 4 fall within a relatively high-efficiency driving range compared to the other modes including the normal mode. Such settings improve the fuel efficiency of the engine 2 and the electricity consumptions of the motor 3 and the generator 4, thereby extending the cruising distance.

Moreover, an accelerator opening degree sensor 8 and a vehicle speed sensor 9 are connected to the controller 10 of this example. The accelerator opening degree sensor 8 is a sensor that detects parameters (such as accelerator opening degree, accelerator pedal stroke, and throttle opening degree) corresponding to the amount of depression of the accelerator pedal. The vehicle speed sensor 9 is a sensor that detects the traveling speed (vehicle speed) of the vehicle 1. The information detected by these sensors 8 and 9 is communicated to the controller 10.

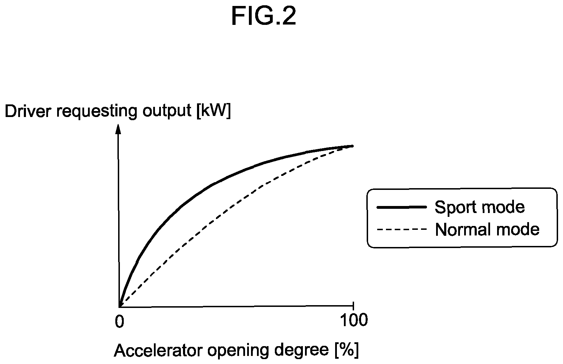

FIG. 2 is a graph exemplifying the characteristics that define the relationship between the accelerator opening degree [%] detected by the accelerator opening degree sensor 8 and the driver requesting output [kW] set by the controller 10. The accelerator opening degree is the amount of depressing of the accelerator pedal (e.g., the accelerator pedal stroke or angle of rotation of the accelerator pedal relative to the fulcrum of the accelerator pedal), expressed in a percentage. The driver requesting output is a parameter corresponding to the magnitude of the output that the driver is requesting for driving the vehicle 1 (in other words, horsepower, electric power, or work rate, i.e. energy). The output of the drive source for the vehicle 1 is controlled to correspond to the driver requesting output.

In both the normal mode and the sport mode, the driver requesting output is set according to the accelerator opening degree. The solid line in FIG. 2 indicates the required output characteristic in the sport mode, and the dashed line indicates that characteristic in the normal mode. In the normal mode, when the accelerator opening degree is 0 [%], the driver requesting output is zero, as indicated by the dashed line in FIG. 2. Then, the driver requesting output is set to be roughly proportional to the accelerator opening degree. On the other hand, in the sport mode, the driver requesting output is set to the same or a higher value compared to the normal mode. In other words, the value of the driver requesting output set in the sport mode is higher than or equal to the value set in the normal mode for the same accelerator opening degree.

Moreover, in FIG. 2, the values of the driver requesting output set in the sport mode and the normal mode only match when the accelerator opening degree is 0 [%] (accelerator is not applied) or 100 [%] (accelerator is fully depressed). For other values of accelerator opening degree than these points, the driver requesting output in the sport mode is always set higher than that in the normal mode.

### [2. Configuration of Control]

The controller 10 performs two types of control on the engine 2 in the sport mode during the series driving to improve the acceleration response of the vehicle 1 for a sudden increase in accelerator opening degree. The first control is a control to set a high engine rotational speed [rpm] (engine revolutions per unit time) for operating engine 2 in preparation for a sudden increase in accelerator opening degree (from when the accelerator is not applied). The second control is to make the maximum value of the increase rate, which is the gradient of the change in engine rotational speed over time, larger in the sport mode than in the normal mode, in the situation where the engine rotational speed increases due to an increase in accelerator opening degree.

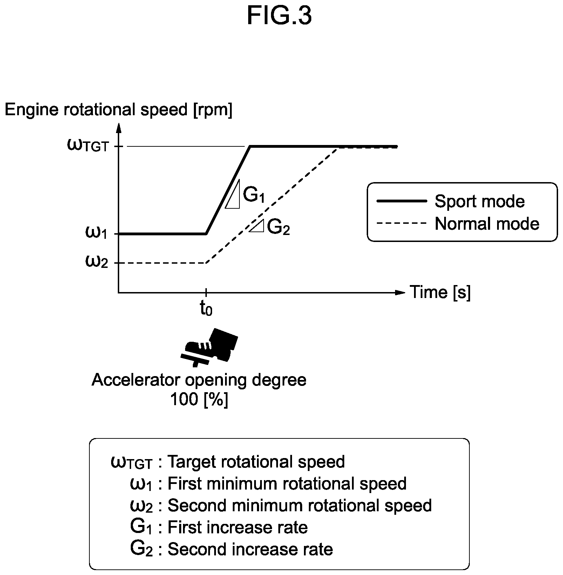

The first control will be described below. First, the minimum (lowest) rotational speed of the engine in the sport mode is defined as a first minimum rotational speed ω₁, and the minimum (lowest) rotational speed of the engine in the normal mode is defined as a second minimum rotational speed ω₂. In the first control, as illustrated in FIG. 3, the operating state of the engine 2 is controlled so that the first minimum rotational speed ω₁ is higher than the second minimum rotational speed ω₂.

The first control is executed when the accelerator pedal is not depressed (before time t₀). At this time, the output of the engine 2 (the product of the torque and the rotational speed) is controlled to be almost the same in the sport mode and the normal mode. In other words, in the first control, the first minimum rotational speed ω₁ of the engine 2 is controlled to be higher in the sport mode, instead the torque of the engine 2 is controlled to be lower compared to the normal mode. The rotational speed and the torque of the engine 2 can be changed by adjusting the load of the generator 4 on the engine 2 (dynamic power that is to be converted by the generator 4 into electric power).

In the first control, since the output of the engine 2 is substantially the same in the sport mode and the normal mode, the electric power generated by the generator 4 and the output of the motor 3 are also controlled to be the same in the sport mode and the normal mode. The output of the motor 3 is controlled to a magnitude, for example, corresponding to the electric power generated by the generator 4, thereby ensuring that battery electric power stored in the battery 5 is not consumed. Additionally, the electric power generated by the generator 4 is controlled to be a certain value according to the output of the engine 2, for example. In general, the maximum value of the electric power generated by the generator 4 increases in proportion to the rotational speed of the generator 4 (i.e., the rotational speed of the engine). Thus, in the sport mode, the generator 4 operates with a larger margin for electric power generation compared to the normal mode, making it easier to increase the generated electric power.

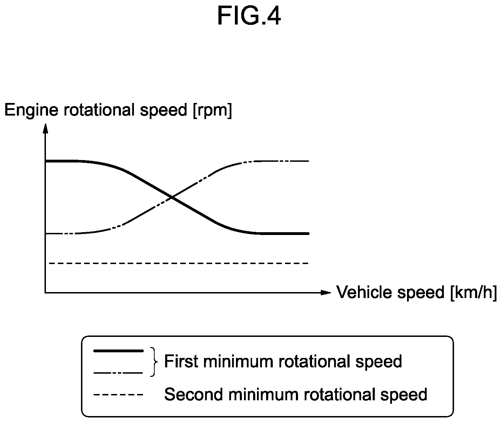

The value of the first minimum rotational speed ω₁ may be a fixed value set in advance or may be a variable value set according to the driving state of the vehicle 1. When the first minimum rotational speed ω₁ is a variable value, the first minimum rotational speed ω₁ may be set according to the vehicle speed detected by the vehicle speed sensor 9. For example, as indicated by the solid line in FIG. 4, the first minimum rotational speed ω₁ may be increased as the vehicle speed reduces. Such a setting improves the acceleration response from a stopped state or low-speed driving state, making it easier to achieve a sporty driving experience.

Alternatively, as indicated by the two-dot chain line in FIG. 4, the first minimum rotational speed ω₁ may be increased as the vehicle speed increases. Such a setting reduces the noise and vibration of the engine 2 in a stopped and low-speed driving state, making it easier to achieve a quieter driving experience. Note that the dashed line in FIG. 4 indicates the second minimum rotational speed ω₂. It is preferable that the first minimum rotational speed ω₁ is always set higher than the second minimum rotational speed ω₂ at any vehicle speed.

Next, the second control will be described. First, the maximum increase rate of the rotational speed of the engine 2 in the sport mode when in the series driving and when the driver requesting output is not zero (when the accelerator opening degree is not zero and when at least the accelerator is applied) is defined as a first increase rate G₁ (also called the first gradient G₁). Similarly, the maximum increase rate of the rotational speed of the engine 2 in the normal mode when in the series driving and when the driver requesting output is not zero is defined as a second increase rate G₂ (also called the second gradient G₂).

In the second control, as illustrated in FIG. 3, the operating state of the engine 2 is controlled such that the first increase rate G₁ is greater than the second increase rate G₂. The second control is executed from the time t₀ when the accelerator pedal is fully depressed. At this time, the increase rate of the rotational speed of the engine 2 is enhanced, for example, by increasing the fuel injection amount or the intake air amount of the engine 2, or by optimizing the ignition timing. As a result, as illustrated in FIG. 3, the upward gradient of the solid line plot becomes steeper compared to the upward gradient of the dashed line plot. In other words, the engine rotational speed reaches the target rotational speed ω_{TGT} in a short time, and the electric power generated by the generator 4 also increases in a short time.

### [3. Flowchart]

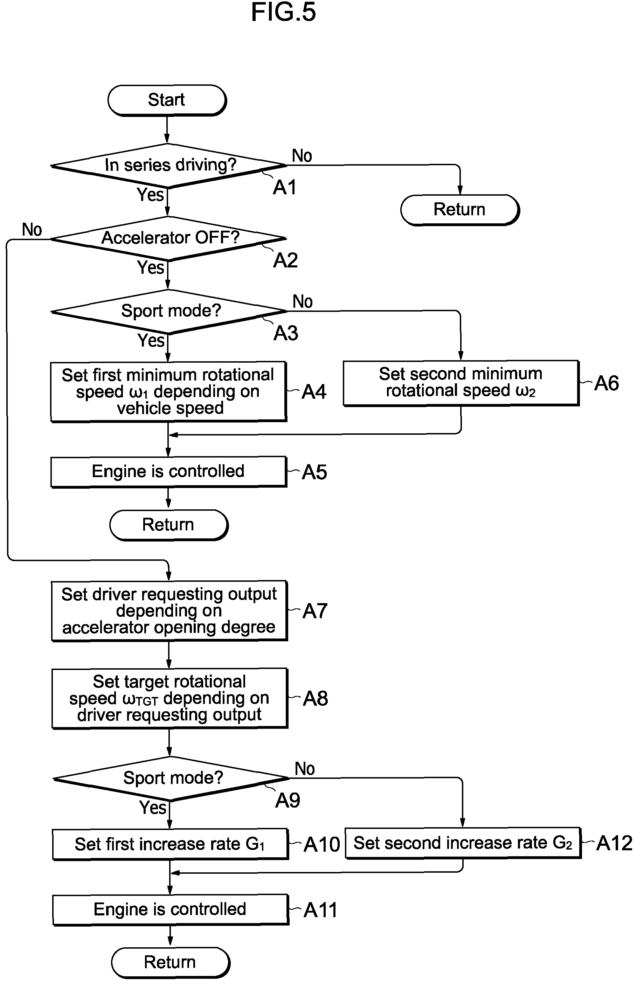

FIG. 5 is an example flowchart of the first control and the second control described above. The control illustrated in this flowchart is repeatedly executed at a given cycle within the controller 10, for example, when the power switch of the vehicle 1 (not illustrated) is turned on and the vehicle 1 is in a drivable state (READY state). In the vehicle 1 where this control is executed, either the sport mode or the normal mode is set as the drive mode. Steps A2 to A6 are the flow corresponding to the first control, and Steps A7 to A12 are the flow corresponding to the second control.

In Step A1, it is determined whether or not the vehicle 1 is running in the series driving. The series driving is automatically performed, for example, when the state of charge of the battery 5 is equal to or smaller than a given value or when the vehicle 1 is approaching an uphill. Alternatively, it is also performed when the driver wishes to run in the series driving (when a corresponding operational input is made). Known conditions can be applied as the specific conditions for performing and starting the series driving. If the condition of Step A1 is satisfied, the control proceeds to Step A2. On the other hand, if the condition of Step A1 is not satisfied, the control in this cycle is terminated.

In Step A2, it is determined whether or not the accelerator opening degree detected by the accelerator opening degree sensor 8 is zero (the accelerator is not applied, OFF state). If this condition is satisfied, the control proceeds to Step A3; if not, the control proceeds to Step A7. In Step A3, it is determined whether or not the drive mode of the vehicle 1 is the sport mode. Here, if the drive mode is the sport mode, the control proceeds to Step A4, where the first minimum rotational speed ω₁ of the engine 2 is set according to the vehicle speed detected by the vehicle speed sensor 9. The first minimum rotational speed ω₁ has a higher value than the second minimum rotational speed ω₂, which is set in the normal mode (set in Step A6 described below). In the subsequent Step A5, the operating state of the engine 2 is controlled so that the rotational speed of the engine becomes the first minimum rotational speed ω₁, and the control in this cycle ends.

On the other hand, if the drive mode of the vehicle 1 is not the sport mode (if the drive mode is the normal mode) in Step A3, the control proceeds to Step A6, where the second minimum rotational speed of the engine ω₂ is set. The second minimum rotational speed ω₂ has a lower value than the first minimum rotational speed ω₁, which is set in the sport mode (set in Step A4). In the subsequent Step A5, the operating state of the engine 2 is controlled so that the rotational speed of the engine becomes the second minimum rotational speed ω₂, and the control in this cycle ends.

In Step A7, which is the branch from Step A2 when the accelerator opening degree is not zero (the accelerator is applied), the driver requesting output is set according to the accelerator opening degree detected by the accelerator opening degree sensor 8. The driver requesting output is set based on a characteristic such as that illustrated in FIG. 2. In Step A8, the target rotational speed ω_{TGT} of the engine 2 is set according to the driver requesting output. Here, if the driver requesting output is relatively large, the difference between the actual engine rotational speed at that time and the target rotational speed ω_{TGT} is large. Accordingly, if the rate to change the engine rotational speed is too low, it would take longer time for the actual engine rotational speed to reach the target rotational speed ω_{TGT}. In contrast, in this example, this rate is changed according to the drive mode.

In the subsequent Step A9, it is determined whether or not the drive mode of the vehicle 1 is the sport mode. Here, if the drive mode is the sport mode, the control proceeds to Step A10, where the first increase rate G₁ is set to the maximum increase rate of the engine rotational speed. The first increase rate G₁ has a larger value than the second increase rate G₂ which is set in the normal mode (which is set in Step A12 described below). In the subsequent Step A11, the operating state of the engine 2 is controlled so that the maximum increase rate of the engine rotational speed becomes the first increase rate G₁, and the control in this cycle ends.

On the other hand, if the drive mode of the vehicle 1 is not the sport mode (if the drive mode is the normal mode) in Step A9, the control proceeds to Step A12, where the second increase rate G₂ is set to the maximum increase rate of the engine rotational speed. The second increase rate G₂ has a smaller value than the first increase rate G₁ which is set in the sport mode (which is set in Step A10). In the subsequent Step A11, the operating state of the engine 2 is controlled so that the maximum increase rate of the engine rotational speed becomes the second increase rate G₂, and the control in this cycle ends.

### [4. Influence]

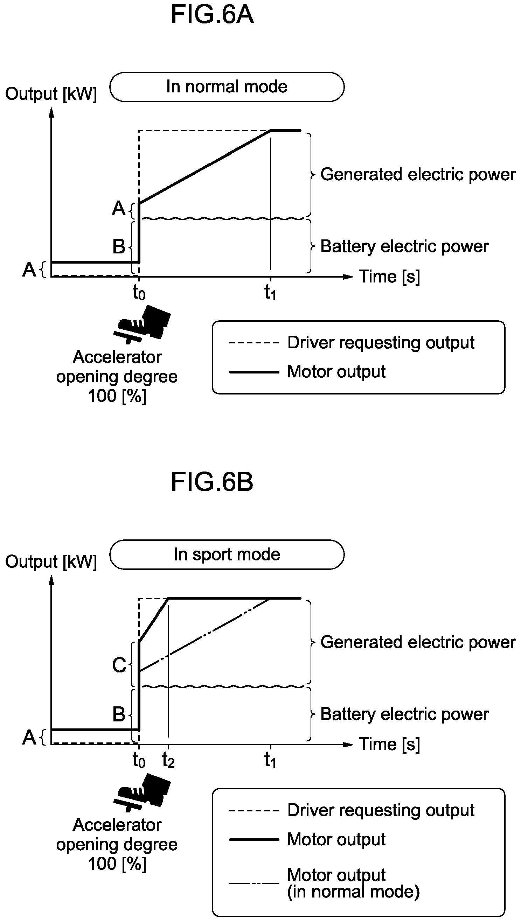

FIGs. 6A and 6B are graphs indicating the change in motor output in response to an operation of the accelerator. FIG. 6A is the graph in the normal mode and FIG. 6B is the graph in the sport mode. Before time t₀, when the accelerator pedal is not depressed, the first control is executed. In this first control, the first minimum rotational speed ω₁ of the engine 2 in the sport mode is set higher than the second minimum rotational speed ω₂ of the engine in the normal mode. Accordingly, the engine 2 rotates at the second minimum rotational speed ω₂ before time t₀ in FIG. 6A, and the engine 2 rotates at the first minimum rotational speed ω₁ before time t₀ in FIG. 6B.

Furthermore, the output of the engine 2 before time t₀ is controlled to be almost the same in the sport mode and the normal mode. Thus, the electric power generated by the generator 4 and the output of the motor 3 are also controlled to be the same in the sport mode and the normal mode. Therefore, the output value A of the motor 3 before time t₀ in FIG. 6A is the same as the output value A of the motor 3 before time t₀ in FIG. 6B, and the driving state of the vehicle 1 is also the same.

When the accelerator pedal is depressed at time t₀, the second control is executed. At this time, as indicated by the dashed lines in FIGs. 6A and 6B, a large driver requesting output is set according to the accelerator opening degree. After time t₀, the motor 3 is driven not only by electric power generated by the generator 4 but also battery electric power stored in the battery 5. The motor output in the normal mode at time t₀ is the sum of the output value A corresponding to the generated electric power before time t₀ and the output value B corresponding to the battery electric power. The battery electric power corresponds to the output value in the area below the wavy line in FIGs. 6A and 6B, and the generated electric power corresponds to the output value in the area between the wavy line and the solid line above the wavy line in FIGs. 6A and 6B.

In contrast, since the first minimum rotational speed ω₁ of the engine 2 is higher in the sport mode than in the normal mode, the generated electric power can be increased immediately by increasing the load of the generator 4 on the engine 2. Accordingly, the motor output in the sport mode at time t₀ is the sum of the output value C, which is greater than the output value A, and the output value B. The output value C is the output with a magnitude equivalent to the generated electric power increased by the generator 4. In this manner, by controlling the engine rotational speed to be higher in advance through the first control, it is possible to easily increase the motor output (initial output for accelerating the vehicle 1) at time t₀.

In addition, in the second control, the first increase rate G₁ of the engine rotational speed in the sport mode is set higher than the second increase rate G₂ of the engine rotational speed in the normal mode. As a result, the time it takes for the engine rotational speed to increase up to the target speed ω_{TGT} is shorter in the sport mode than in the normal mode. Correspondingly, the time it takes for the motor output to reach the driver requesting output is also shorter in the sport mode than in the normal mode.

For example, the motor output reaches the driver requesting output at time t₁ in FIG. 6A, whereas the motor output reaches the driver requesting output at time t₂ in FIG. 6B, which is earlier than time t₁. The upward gradient of the motor output in the normal mode is gentle, as indicated by the solid line in FIG. 6A [and as indicated by the two-dot chain line in FIG. 6B]. In contrast, the upward gradient of the motor output in the sport mode is steep, as indicated by the solid line in FIG. 6B. These graphs indicate that the time span from time t₀ to the realization of the driver requesting output is extremely short in the sport mode and a good acceleration response can be obtained.

### [5. Advantageous Effects]

(1) The hybrid vehicle 1 of this example is a hybrid vehicle that performs the series driving, and has the normal mode in which the driver requesting output is set according to the accelerator opening degree, and the sport mode in which the driver requesting output is set greater than or equal to that set in the normal mode according to the accelerator opening degree. Additionally, the controller 10 controls the first minimum rotational speed ω₁ of the engine 2 in the sport mode to be higher than the second minimum rotational speed ω₂ of the engine 2 in the normal mode (first control) during the series driving.
   In other words, the minimum rotational speed (idle rotational speed) of the engine 2 in the sport mode is controlled to be higher than that in the normal mode. This allows the rotational speed of the engine to be increased to a desired level in a relatively short time when the accelerator pedal is depressed. For example, as illustrated in FIG. 6B, the output value C at time t₀ can be set to be greater than the output value A before time t₀. Consequently, the acceleration response immediately after the accelerator is applied in the sport mode during the series driving can be improved.
(2) The controller 10 controls the first increase rate G₁ to be greater than the second increase rate G₂ (second control). The first increase rate G₁ is the maximum increase rate of the rotational speed of the engine 2 in the sport mode when in the series driving and when the driver requesting output is not zero. Furthermore, the second increase rate G₂ is the maximum increase rate of the rotational speed of the engine 2 in the normal mode when in the series driving and when the driver requesting output is not zero.
   By setting the maximum increase rate of the engine rotational speed higher when the accelerator is applied in the sport mode in this manner, the electric power generated by the generator 4 can be increased in a short time. For example, as illustrated in FIG. 6B, the gradient of the increase in generated electric power after time t₀ can be made steeper and the motor output can be increased with a steep gradient. Therefore, the time it takes for the motor output to reach the driver requesting output can be shortened, and the acceleration response of the vehicle 1 can be further improved.
(3) As illustrated in FIG. 4, the controller 10 may set the first minimum rotational speed ω₁ according to the vehicle speed. Such a setting allows the vehicle speed, which represents the driving state of the vehicle 1, to be reflected in the minimum rotational speed of the engine 2, making it easier to balance acceleration response and quietness. Note that the relationship between the vehicle speed and the first minimum rotational speed ω₁ may be selected according to the driver's preference or may be automatically set based on the driving state of the vehicle 1.
(4) With regard to the relationship between the vehicle speed and the first minimum rotational speed ω₁, the first minimum rotational speed ω₁ may be increased as the vehicle speed decreases, as indicated by the solid line in FIG. 4. Such a setting can improve the acceleration response from a stopped state or low-speed driving state, thereby achieving a more sporty driving experience. However, since the noise and vibration of the engine 2 at a stopped state or low-speed driving state increase slightly, quietness may slightly decrease.
(5) Conversely, the first minimum rotational speed ω₁ may be increased as the vehicle speed increases, as indicated by the two-dot chain line in FIG. 4. Such a setting can reduce the noise and vibration of the engine 2 in a stopped state or low-speed driving state, thereby achieving a quieter and more comfortable driving experience. Additionally, the acceleration response during a high-speed driving state can also be improved. Note that setting the characteristics indicated by the solid line in FIG. 4 is advantageous for the acceleration response from a stopped state or low-speed driving state.

### [6. Miscellaneous]

The example described above is merely exemplary, and there is no intention to exclude various modifications or the application of techniques not specified in this example. Each configuration of this example can be variously modified without departing from the gist thereof. In addition, each configuration of this example can be selected as necessary, or they can be combined as appropriate.

For example, although the vehicle 1 described above includes the drive mode selector 7, the drive mode selector 7 may be omitted and either the normal mode or the sport mode can be automatically selected according to known conditions. In addition, although the controller 10 that executes the first control and the second control on the engine 2 in the sport mode during the series driving is exemplified in the above-described example, the second control can be omitted. In a hybrid vehicle that has at least the normal mode and the sport mode and performs the series driving, the first control can improve the acceleration response immediately after the accelerator is applied, and the same effects and advantages as in the above-described example can be obtained.

Furthermore, although the relationship between the vehicle speed and the first minimum rotational speed ω₁ as illustrated in FIG. 4 is exemplified in the above-described example, the first minimum rotational speed ω₁ may be set to a fixed value, or a parameter other than the vehicle speed may be reflected in the value of the first minimum rotational speed ω₁. The same applies to the second minimum rotational speed ω₂, which may be set to a fixed value, or the vehicle speed or any other parameter may be reflected in the value of the second minimum rotational speed ω₂. When at least the first minimum rotational speed ω₁ is set higher than the second minimum rotational speed ω₂ to control the engine 2, the same effects and advantages as in the above-described example can be achieved.

### [INDUSTRIAL APPLICABILITY]

The present disclosure is applicable to the hybrid vehicle manufacturing industry and can be used in the manufacturing industry of controllers for hybrid vehicles

### [DESCRIPTION OF REFERENCE SYMBOLS]

- 1: Vehicle (hybrid vehicle)
- 2: Engine
- 3: Motor
- 4: Generator
- 5: Battery
- 6: Clutch
- 7: Drive mode selector
- 8: Accelerator opening degree sensor
- 9: Vehicle speed sensor
- 10: Controller
- ω_{TGT}: Target rotational speed
- ω₁: First minimum rotational speed
- ω₂: Second minimum rotational speed
- G₁: First increase rate
- G₂: Second increase rate

## Claims

1. A hybrid vehicle comprising an engine, a motor, a generator, and a controller that controls an operating state of at least the engine, the hybrid vehicle being capable of performing series driving in which driving force from the motor causes the vehicle to drive while driving force from the engine causes the generator to generate electric power,
wherein the hybrid vehicle has a normal mode in which a driver requesting output is set according to an accelerator opening degree and a sport mode in which the driver requesting output is set to be equal to or higher than the driver requesting output set in the normal mode according to the accelerator opening degree, and
the controller sets a first minimum rotational speed of the engine in the sport mode to be higher than a second minimum rotational speed of the engine in the normal mode during the series driving.

2. The hybrid vehicle according to claim 1, wherein
when the vehicle is driving in the series driving and the driver requesting output is not zero, the controller sets a first increase rate to be higher than a second increase rate.
where the first increase rate is a maximum increase rate of a rotational speed of the engine in the sport mode and the second increase rate is a maximum increase rate of the rotational speed of the engine in the normal mode.

3. The hybrid vehicle according to claim 1 or 2, wherein
the controller sets the first minimum rotational speed according to a vehicle speed.

4. The hybrid vehicle according to claim 3, wherein
the controller increases the first minimum rotational speed as the vehicle speed reduces.

5. The hybrid vehicle according to claim 3, wherein
the controller increases the first minimum rotational speed as the vehicle speed increases.
